# EUROPÄISCHE PATENTSCHRIFT

(11) **EP 1 765 603 B1**
(45) Veröffentlichungstag und Bekanntmachung des Hinweises auf die Patenterteilung: **13.04.2016**
(21) Anmeldenummer: 05745491.0
(22) Anmeldetag: 31.05.2005
(51) Int. Cl.: B42D 25/00, G06K 19/02

(54) **AUSWEISDOKUMENT IN BUCHFORM MIT ELEKTRONISCHEM DATENTRÄGER**
IDENTIFICATION DOCUMENT IN THE FORM OF A BOOK, COMPRISING AN ELECTRONIC DATA CARRIER
DOCUMENT D'IDENTITE EN FORME DE LIVRE, POURVU D'UN SUPPORT DE DONNEES ELECTRONIQUE

(30) Priorität: 12.07.2004 DE 202004010861 U; 10.08.2004 DE 202004012493 U
(43) Veröffentlichungstag der Anmeldung: 28.03.2007
(73) Patentinhaber: PAV Card GmbH, 22952 Lütjensee (DE)
(72) Erfinder: KISTENMACHER, Dirk, 21493 Fuhlenhagen (DE); FRÜCHTENICHT, Dierk, 22929 Schoenberg (DE)
(74) Vertreter: Kruspig, Volkmar
(86) Internationale Anmeldenummer: PCT/EP2005/005849
(87) Internationale Veröffentlichungsnummer: WO 2006/005396

(56) Entgegenhaltungen:
- EP-A- 1 073 993
- EP-A- 1 502 765
- EP-A- 1 564 022
- WO-A-01/02190
- WO-A-01/18745
- WO-A-02/02350
- WO-A-2004/048118
- WO-A-2005/073907
- DE-A1- 10 205 914
- FR-A- 2 863 083
- US-A1- 2003 173 406
- US-A1- 2005 060 637

## Beschreibung

Die Erfindung betrifft ein Ausweisdokument in Buchform mit elektronischem Datenträger nach dem Oberbegriff des Anspruchs 1.

Fälschungssichere und insbesondere maschinenlesbare Ausweisdokumente sind vor allem in Hinblick auf Sicherheitsaspekte sehr vorteilhaft. Zum Auslesen der Daten wird bei den momentan verwendeten Dokumenten auf eine optisch lesbare Schrift mit den Daten des Ausweisinhabers zurückgegriffen, die anschließend in einer Sicherheitsdatenbank mit den dort gespeicherten Daten abgeglichen werden.

Derartige Ausweisdokumente lassen aber nur ein Lesen von Daten von dem Dokument, aber kein Schreiben oder Verändern der Daten auf dem Dokument zu, so dass jeder Lesevorgang an jedem einschlägigen Terminal mit einem Datenabgleich auf einem mitunter sehr entfernt lokalisierten zentralen Server verbunden ist. Dies ist beispielsweise bei der Überprüfung von Straf- oder Vergehensregistern, beispielsweise bei der Nachfrage zum gegenwärtigen Punktestand eines Verkehrsteilnehmers sehr nachteilig, denn das Dokument des Verkehrsteilnehmers selbst weist keine derartigen Daten auf, weil das Dokument nicht für eine Datenspeicherung ausgelegt ist.

WO 2004/048118 A offenbart allgemeine Sicherheitsmerkmale in Form von stofflichen Markierungen, die mittels verschiedener Energieeinträge aktivierbar sind. Vorwiegend betrifft dies fluoreszierende bzw. lumineszierende, holografische, gelegentlich auch elektrisch leitfähige Anordnungen.

Die Druckschriften EP 1 073 993 A1 und WO 02/02350 A1 offenbaren ein Papiermaterial mit einem integrierten Schaltkreis. Der Schaltkreis ist dabei in das Papiermaterial eingebracht. Ein Kunststofflaminat, ein Vlies oder Gewebe oder auch ein Deckel oder Rücken im Sinne eines buchförmigen Ausweisdokumentes ist nicht Gegenstand der Lehre der Druckschriften.

In der WO 01/02190 A1 wird ein Verfahren zur Herstellung eines Identifizierungsmittels aus mehreren Schichten offenbart, wobei insbesondere Bilder eingebracht werden sollen.

Gemäß DE 102 05 914. A1 ist ein Herstellungsverfahren für Folien mit einer Transponderantennenspule benannt. Das offenbarte Verfahren betrifft ausschließfich die Herstellung eines Laminates unter Verwendung von Kunststoffen, insbesondere Polyester.

Die Druckschrift US 2003/0173406 A1 betrifft ein Identifikationsmittel und ein Verfahren zur Herstellung des Identifikationsmittels mit einem unter UV- Belichtung aktivierbaren Bildes.

In der WO 01/18745 A wird eine transparente Karte mit einem bei sichtbarem Licht unsichtbaren Identifikationsmerkmal und einem kontaktbehafteten Speicherchip offenbart.

Die Druckschriften US 2005/0060637 A1 und WO 2005/073907 A1 betreffen ein Halbfabrikat für ein buchförmiges Ausweisdokument mit Chip oder Chipkarten und ein Herstellungsverfahren hierfür. Gemäß diesen Druckschriften ist eine Transpondereinheit mit Antenne und Chip auf einem Substreit aufgebracht. In einem Falzvorgang wird die Transpondereinheit in dem Substrat eingeschlossen. Dementsprechend verlaufen die Antennendrähte stets innerhalb eines gleichen Schichtaufbaus.

Gemäß EP 1 564 022 A2 ist ein Passdokument mit einem Transponder bekannt, wobei sich der Transponder ausschließlich auf einem Passblatt, also einem Innenbereich des Dokuments, befindet.

In der FR 2 863 083 A1 verläuft eine Antenne beispielsweise um den Rücken eines Ausweisdokumentes herum.

Die EP 1 502 765 A1 betrifft hingegen ein personalisiertes Datenblatt für ein buchförmiges Ausweisdokument. Das Datenblatt besteht dabei aus einer flexiblen Schicht, auf welche beidseitig so genannte Datenträger als Schichten aufgebracht sind. Diese enthalten insbesondere einen Chip und dergleichen Datenspeicher. Dieses so ausgebildete Datenblatt ist mit einem Umschlag und anderen Blättern im Inneren des Buches befestigt, insbesondere eingenäht.

Es ergibt sich daher die Aufgabe der Erfindung, ein Ausweisdokument anzugeben, das eine einfache und kostengünstige Datenspeicherung in Verbindung mit einer einfachen Möglichkeit der Datenübertragung und einer größtmöglichen Fälschungssicherheit des Dokumentes vereint.

Die Erfindung wird mit einem Ausweisdokument mit einem elektronischen Datenträger nach den Merkmalen des Anspruchs 1 gelöst, wobei die Unteransprüche zweckmäßige Erweiterungen und Ausgestaltungen des Hauptanspruchs enthalten.

Das Ausweisdokument weist eine in den Bereich des Rückens und/oder Deckels des Ausweisdokumentes integrierte Anordnung aus einem elektronischen Datenträger in Verbindung mit einer Antenneneinrichtung für eine kontaktlose Datenübertragung auf. Alternativ ist lediglich ein leitfähiges Gewebe oder Gewirk als quasi "elektronisches Gelenk" im Bereich des Rückens ausgebildet.

Damit ist in den Körper des Ausweisdokumentes ein Datenspeicher, insbesondere ein Speicherchip, und eine Antenneneinrichtung integriert, wobei der Körper des Dokumentes, Antenneneinrichtung und Datenspeicher eine unlösbare Einheit bilden, die nur durch eine Zerstörung des Ausweisdokumentes voneinander getrennt werden kann und somit weitgehend fälschungssicher ist.

Bei einer Ausführungsform kann der elektronische Datenträger und/oder die Antenneneinrichtung als ein in den Rücken und/oder Deckel unlösbar eingebrachtes, insbesondere eingenähtes, Kunststofflaminat mit einlaminiertem Speicherchip und/oder einlaminierter Spuleneinrichtung ausgebildet. Speicherchip und/oder Spuleneinrichtung sind somit von außen unzugänglich in einem Kunststoffkörper verborgen, wobei der Kunststoffkörper wiederum mit dem Deckel bzw. Rücken des Ausweisdokumentes eine unlösbare Einheit bildet, die nur durch Zerstörung des gesamten Ausweisdokumentes verändert werden kann, und somit fälschungssicher ist.

Erfindungsgemäß ist der elektronische Datenträger und/oder die Antenneneinrichtung als ein Bestandteil eines in den Ausweisrücken integrierten, mit dem Ausweisdokument unlösbar verbundenen, insbesondere vernähten, Vlieses oder Gewebes ausgebildet, wobei innerhalb des Deckels die Leiterbahnen der Antenneneinrichtung bzw. der Datenspeicher in ein Kunststofflaminat eingebettet sind und im Bereich des Rückens das Kunststofflaminat in das Vlies oder Gewebe übergeht, das einen Teil des Rückens bildet, wobei innerhalb des Gewebes Leiterbahnen der Antenneneinrichtung enthalten sind.

Das Vlies oder das Gewebe enthält somit einerseits den Datenträger und/oder Antenneneinrichtung als einen integralen Bestandteil und dient andererseits zur Verbindung des Ausweisdokuments.

Das Vlies oder Gewebe kann in einer vorteilhaften Fortbildung mindestens abschnittsweise in das Kunststofflaminat eingebracht sein und im Bereich des Rückens des Ausweisdokumentes ein flexibles Gelenkelement ausbilden. Damit ist es möglich, die Antenneneinrichtung über den Rücken des Ausweisdokumentes herum zu führen, wobei diese gleichzeitig eine flexible Gelenkverbindung zwischen den Deckeln bzw. zwischen dem Kunststofflaminat bildet.

Zweckmäßigerweise besteht das Vlies oder Gewebe aus einem metallischen oder Kunststoffwerkstoff, insbesondere einem Faserwerkstöff.

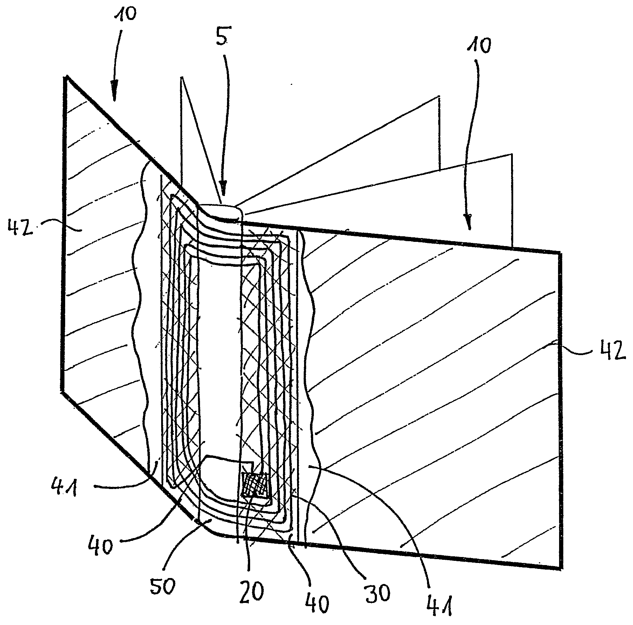

Die Erfindung soll nachfolgend anhand eines Ausführungsbeispiels näher erläutert werden. Zur Verdeutlichung dient die angefügte Figur. Es werden für gleiche oder gleich wirkende Teile die selben Bezugszeichen verwendet. Die Figur zeigt ein aufgeschlagenes Ausweisdokument mit einem teilweise aufgeschnittenen Rücken 5 bzw. Deckel 10. Der Deckel weist einen in diesem Ausführungsbeispiel als Speicherchip ausgebildeten Datenträger 20 auf, der mit einer Antenneneinrichtung 30 für einen kontakt- bzw. berührungslosen Datenaustausch mit externen Leseeinrichtungen verbunden ist. Die Antenneneinrichtung ist in diesem Ausführungsbeispiel als eine spulenartige Anordnung ausgeführt.

In dem in der Figur gezeigten Ausführungsbeispiel überdeckt die Anordnung aus Antenneneinrichtung und Datenspeicher sowohl einen Teil des rückseitigen und vorderseitigen Deckels als auch des Rückens des Ausweisdokumentes. Innerhalb des Deckels 10 sind die Leiterbahnen der Antenneneinrichtung 30 bzw. der Datenspeicher 20 in ein Kunststofflaminat 40 eingebettet und bildet mit diesem einen unlösbaren kompakten Körper aus. Dieser Verbund ist in den Deckel 10 des Ausweisdokumentes unlösbar eingearbeitet und kann nur durch Zerstörung des Deckels 10 bzw. des Kunststofflaminates entfernt werden. Dazu ist beispielsweise das Kunststofflaminat 40 mit einem aus Pappe oder Kunststoff bestehenden Grundkörper 41 des Deckels 10 verklebt oder vernäht und mit einer Kaschierung 42 des Deckels 10 überdeckt und zusätzlich unlösbar so verbunden, dass die Kaschierung nur durch eine irreversible Beschädigung des Ausweisdokumentes vom Bereich des Kunststofflaminates entfernt werden kann.

Im Bereich des Rückens 5 des Ausweisdokumentes geht das Kunststofflaminat in ein Vlies oder Gewebe 50 über, das als flexibles Material einen Teil des Rückens 5 bildet. Das Vlies bzw. das Gewebe bestehen hierbei vorzugsweise aus Kunststofffasern, die innerhalb des Gewebes die Leiterbahnen der Antenneneinrichtung 30 enthalten. Vorteilhafterweise ist das Vlies bzw. das Gewebe 50 in das bereits erwähnte Kunststofflaminat eingebracht, d.h. zwischen die Laminatoberflächen einlaminiert und innerhalb des Laminates mit dem Datenträger 20 verbunden.

Weiterhin ist das Vlies bzw. das Gewebe mit dem Grundkörper des Deckels bzw. den weiteren Komponenten des Rückens unlösbar so verbunden, insbesondere verklebt oder vernäht, dass ein Heraustrennen des Vlieses bzw. Gewebes zu dessen irreversibler Zerstörung führt.

Dabei bilden die Abschnitte des auf den Deckeln 10 des Ausweisdokumentes angeordneten Kunststofflaminates 40 in Verbindung mit dem innerhalb des Rückens 5 angeordneten Vlies oder Gewebe 50 eine Gelenkverbindung aus, die ein Aufklappen bzw. Schließen der Deckel 10 gestattet und gleichzeitig eine kontaktlose Datenübertragung zwischen der Antenneneinrichtung 30 und externen Lesegeräten ermöglicht.

Erfindungsgemäß ist eine Reihe von abgewandelten Ausführungsformen möglich, bei denen die gesamte Anordnung aus Kunststofflaminat 40 bzw. Vlies oder Gewebe 50 in den Deckel 10 des Ausweisdokumentes integriert sind. Zum Beispiel kann das Vlies bzw. Gewebe aus Sicherheitsgründen mehrfach mit der Kaschierung 42 des Deckels verbunden, beispielsweise versteppt sein.

Weitere Ausführungsformen ergeben sich aus den Unteransprüchen bzw. durch Erweiterungen bzw. Kombinationen der hier offenbarten Merkmale im Rahmen fachmännischen Handels.

### Bezugszeichenliste

- 5: Rücken
- 10: Deckel
- 20: Datenträger
- 30: Antenneneinrichtung
- 40: Kunststofflaminat.
- 41: Deckelgrundkörper
- 42: Kaschierung
- 50: Vlies / Gewebe

## Patentansprüche

1. Ausweisdokument in Buchform mit elektronischem Datenträger, umfassend eine in den Bereich des Rückens (5) und/oder Deckels (10) des Ausweisdokumentes integrierte Anordnung aus dem elektronischen Datenträger in Verbindung mit einer Antenneneinrichtung für eine kontaktlose Datenübertragung,
**dadurch gekennzeichnet, dass**
der elektronische Datenträger (20) und/oder die Antenneneinrichtung (30) als ein Bestandteil eines in den Ausweisrücken (5) integrierten, mit dem Ausweisdokument vernähten, Vlieses oder Gewebes (50) ausgebildet ist, wobei
innerhalb des Deckels (10) die Leiterbahnen der Antenneneinrichtung (30) bzw. der Datenspeicher (20) in ein Kunststofflaminat (40) eingebettet sind und
im Bereich des Rückens (5) das Kunststofflaminat in das Vlies oder Gewebe (50) übergeht, das einen Teil des Rückens (5) bildet, wobei innerhalb des Gewebes Leiterbahnen der Antenneneinrichtung (30) enthalten sind.

2. Ausweisdokument nach Anspruch 1,
**dadurch gekennzeichnet, dass**
der elektronische Datenträger (20) und/oder die Antenneneinrichtung (30) als ein in den Rücken (5) und/oder den Deckel (10) eingenähtes Kunststofflaminat (40) mit einlaminiertem Speicherchip und/oder einlaminierter Spuleneinrichtung ausgebildet ist.

3. Ausweisdokument nach Anspruch 1 oder 2,
**dadurch gekennzeichnet, dass**
das Vlies oder Gewebe (50) mindestens abschnittsweise in das Kunststofflaminat (40) eingebracht ist und insbesondere ein im Bereich des Rückens (5) angeordnetes flexibles Gelenkelement ausbildet.

4. Ausweisdokument nach einem der vorhergehenden Ansprüche,
**dadurch gekennzeichnet, dass**
das Vlies oder Gewebe (50) aus einem metallischen oder Kunststoffwerkstoff, insbesondere einem Faserwerkstoff, ausgeführt ist.

## Claims

1. An identification document in the form of a book with an electronic data carrier, comprising an arrangement consisting of the electronic data carrier in conjunction with an antenna device for contactless data transmission and being integrated in the region of the spine (5) and/or cover (10) of the identification document, **characterized in that** the electronic data carrier (20) and/or the antenna device (30) is formed as a component of a nonwoven material or fabric (50) which is integrated in the spine (5) of the identification document and is sewn together with the identification document, wherein the conductor paths of the antenna device (30) or the data memory (20) are embedded within the cover (10) in a plastic laminate (40), and the plastic laminate converges in the region of the spine (5) into the nonwoven material or fabric (50) which forms a part of the spine (5), wherein conductor paths of the antenna device (30) are contained within the fabric.

2. An identification document according to claim 1, **characterized in that** the electronic data carrier (20) and/or the antenna device (30) is formed as a plastic laminate (40) with a storage chip that is laminated therein and/or a coil device that is laminated therein, which laminate is sewn into the spine (5) and/or the cover (10).

3. An identification document according to claim 1 or 2, **characterized in that** the nonwoven material or fabric (50) is introduced at least in sections into the plastic laminate (40) and especially forms a flexible joint element arranged in the region of the spine (5).

4. An identification document according to one of the preceding claims, **characterized in that** the nonwoven material or fabric (50) is made of a metallic or plastic material, especially a fibre material.

## Revendications

1. Document d'identité en forme de livret avec un support de données électronique, incluant un agencement, agencé dans la région du dos (5) et/ou de la couverture (10) du document d'identité, formé du support de données électronique en association avec un moyen formant antenne pour une transmission de données sans contact,
**caractérisé en ce que** le support de données électronique (20) et/ou le moyen formant antenne (30) est réalisé comme un élément constitutif d'un non-tissé ou d'un tissu (50) intégré dans le dos (5) et cousu avec le document d'identité, dans lequel
à l'intérieur de la couverture (10) les pistes conductrices du moyen formant antenne (30) ou respectivement du support de données (20) sont noyées dans un stratifié de matière plastique (40), et
dans la région du dos (5) le stratifié de matière plastique se transforme dans le non-tissé ou dans le tissu (50) qui forme une partie du dos (5) et les pistes conductrices du moyen formant antenne (30) sont contenues à l'intérieur du tissu.

2. Document d'identité selon la revendication 1,
**caractérisé en ce que** le support de données électronique (20) et/ou le moyen formant antenne (30) est réalisé sous la forme d'un stratifié de matière plastique (40), cousu dans le dos (5) et/ou dans la couverture (10), avec intégration dans le stratifié d'une puce à mémoire et/ou d'un moyen formant bobine.

3. Document d'identité selon la revendication 1 ou 2,
**caractérisé en ce que** le non-tissé ou le tissu (50) est introduit au moins localement dans le stratifié de matière plastique (40) et forme en particulier un élément d'articulation flexible agencé dans la région du dos (5).

4. Document d'identité selon l'une des revendications précédentes,
**caractérisé en ce que** le non-tissé ou le tissu (50) est réalisé en une matière métallique ou une matière plastique, en particulier une matière fibreuse.
